# EUROPÄISCHE PATENTSCHRIFT

(11) **EP 0 592 952 B1**
(45) Veröffentlichungstag und Bekanntmachung des Hinweises auf die Patenterteilung: **08.01.1997**
(21) Anmeldenummer: 93116280.4
(22) Anmeldetag: 08.10.1993
(51) Int. Cl.: C08J 11/22, C08G 18/83

(54) **Verfahren zur Herstellung von Recyclatpolyolen und deren Verwendung bei der Herstellung von Polyurethanen**
Process for the preparation of recycle polyols and their use in the preparation of polyurethanes
Procédé pour la préparation de polyols de recyclage et leur utilisation pour la préparation de polyuréthanes

(30) Priorität: 12.10.1992 DE 4234335
(43) Veröffentlichungstag der Anmeldung: 20.04.1994
(73) Patentinhaber: BASF SCHWARZHEIDE GmbH, 01987 Schwarzheide (DE)
(72) Erfinder: Gassan, Michael, D-01968 Senftenberg (DE); Naber, Bernhard, D-01987 Schwarzheide (DE); Neiss, Vera, D-01987 Schwarzheide (DE); Moeckel, Peter, Dr., D-04469 Luetzschena (DE); Weissflog, Wolfgang, D-06122 Halle (DE)
(74) Vertreter: Karau, Wolfgang, Dr.

(56) Entgegenhaltungen:
- EP-A- 0 105 167
- WO-A-92/02576
- DD-A- 226 576
- DE-A- 4 215 014
- FR-A- 2 268 825
- US-A- 3 632 530

## Beschreibung

Die Erfindung betrifft ein Verfahren zur Herstellung von Recyclatpolyolen durch Glykolyse von Polyurethanen (PUR) und/oder Polyharnstoffpolyurethanen (PHPUR). Die Erfindung betrifft weiterhin die Verwendung der so erhaltenen Recyclatpolyole zur Herstellung von zelligen und nichtzelligen Polyurethanen.

Es ist bekannt, daß PUR und PHPUR durch Umsetzung mit mindestens 2 OH-Gruppen enthaltenden Verbindungen, die sogenannte Glykolyse, unter Abbau in flüssige Produkte umgewandelt werden können, die Gemische von Verbindungen mit OH-Gruppen darstellen. Diese Recyclatpolyole können zur Herstellung vorzugsweise harter PUR-Schaumstoffe, aber auch Vergußmassen eingesetzt werden.

Das Verfahren zur Glykolyse von PUR und PHPUR ist grundsätzlich bekannt und in verschiedenen Ausführungen beschrieben.

Beispielhaft seien hier die Schriften DE-A-25 16 863, DE-A-25 57 172, DE-C-37 02 495, US-A-31 09 824 oder US-A-34 04 103 genannt. Die Glykolyse von PUR-RIM wird von H. Brückner et al. in Kunststoffe 81 (1991) 9, S. 751-759 dargestellt und mit anderen Methoden des Recyclings von PUR und PHPUR verglichen.

Die heute bekannten Methoden der Glykolyse unterscheiden sich durch die eingesetzten Glykole, Katalysatoren und Reaktionsbedingungen, wobei die Glykole gewöhnlich überstöchiometrisch eingesetzt werden. Die DE-C-40 24 601 beschreibt den Einsatz der Glykole im Unterschuß. Dabei erhält man als Reaktionsprodukt eine Dispersion von teilglykolysierten PUR und PHPUR in Primärpolyol.

Bei den bekannten glykolytischen Verfahren entstehen durch den Wassergehalt der Glykole und die Restfeuchte der eingesetzten PUR und PHPUR auch die den Isocyanaten zugrunde liegenden Amine. Aromatische Amine sind jedoch Stoffe, die als Krebserzeuger verdächtig sind. Sie müssen zur gefahrlosen Handhabung der Recyclatpolyole aus diesen weitgehend entfernt werden. Die Amine wirken sich außerdem störend in den aus den Recyclatpolyolen formulierten PUR-Systemen aus. Sie beschleunigen die Reaktion der PUR-Bildung stark, bilden starre Harnstoffgruppen und vermindern die Steuerbarkeit der PUR-Bildungsreaktion durch andere Katalysatoren. Weiterhin führt der Gehalt an freien Aminen in Polyolkomponenten von PUR-Systemen im Kontakt mit Isocyanaten sofort zu hochthixotropen Massen, wie die Patentschrift DD-A-156 480 lehrt.

Gemäß DE-C-40 24 601 wird entaminiert, indem dem Glykolyseansatz monomere Acrylsäure zugesetzt wird. Diese reagiert über die Doppelbindung mit den Aminen und wird in das Recyclatpolyol eingebaut. Nachteil dieser Methode ist, daß die resultierenden Recyclatpolyole eine hohe Säurezahl haben, was zu Schwierigkeiten in den das Recyclatpolyol enthaltenden PUR-Systemen führen kann. Weiterhin stört der deutliche Geruch nach Acrylsäure.

Es ist auch möglich, die Recyclatpolyole durch Umsetzen mit Propylenoxid zu entaminieren. Nachteilig ist dabei die Notwendigkeit des Einsatzes teurer Druckreaktoren zur Durchführung der Reaktion. Da Propylenoxid mit Luft explosive Gemische bildet, muß die Anlage kostspielig explosionsgeschützt werden.

Neben der Forderung nach einem geringen Gehalt an aromatischen Aminen muß ein Recyclatpolyol eine homogene Flüssigkeit sein. Aus diesem Grunde werden als kurzkettige, mindestens 2 OH-Gruppen enthaltende Verbindungen bevorzugt Dipropylenglykol (DPG) und seine höheren Homologen verwendet. Der Einsatz von Diethylenglykol (DEG) und seinen höheren Homologen, der Kostenvorteile bringen würde, führt zu mehrphasigen Produkten, die in dieser Form nicht zur Rezeptierung von neuen PUR-Systemen zur Erzeugung zelliger und/oder nichtzelliger PUR einsetzbar sind.

Diese Phasentrennung kann jedoch dazu genutzt werden, das rohe Recyclatpolyol in eine zur Herstellung von Weichschaumstoffen und eine zur Herstellung von Hartschaumstoffen geeignete Fraktion zu trennen.

Dieses Verfahren wurde von K.W. Kroesen zur Utech'92 Conference, 31.03.-02.04.92, Den Haag, Niederlande, vorgestellt.

DEG und/oder seine höheren Homologen als Glykolyseglykol einzusetzen, wäre sehr wünschenswert, da diese Produkte deutlich preiswerter als DPG und seine Homologen sind. Der Einsatz von homogenisierenden Mitteln, wie z.B. Frischpolyolen, führt nicht zu befriedigenden Ergebnissen und vermindert zudem die Recyclingquote.

Der Erfindung lag daher die Aufgabe zugrunde, ein kostengünstiges Verfahren zur Glykolyse von PUR und/oder PHPUR zur Verfügung zu stellen, welches ein aminarmes und homogenes Recyclatpolyol liefert, das sich insbesondere zur erneuten Herstellung von PUR eignet.

Diese Aufgabe wird erfindungsgemäß dadurch gelöst, daß PUR und/oder PHPUR mit OH-Gruppen enthaltenden Verbindungen, die nicht mehr als 20 C-Atome enthalten, umgesetzt werden, wobei dem Reaktionsgemisch über den gesamten Verlauf der Reaktion Glycidether zudosiert werden.

Gegenstand der Erfindung ist somit ein Verfahren zur Herstellung von Recyclatpolyolen durch Glykolyse von PUR und/ oder PHPUR mit nicht mehr als 20 C-Atome und mindestens 2 OH-Gruppen enthaltenden Verbindungen in Gegenwart von Katalysatoren, dadurch gekennzeichnet, daß über den gesamten Verlauf der Reaktion mono- und/oder difunktionelle Glycidether zudosiert werden.

Dabei sind als monofunktionelle Glycidether solche der allgemeinen Formel (I) 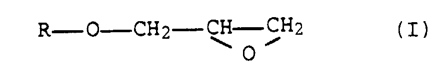 in der R = Phenyl, Cyclohexyl, Methylcyclohexyl, Benzyl, i-Propyl, i-Butyl, methyl- und/oder ethylverzweigte Kohlenwasserstoffketten mit 5 bis 10 C-Atomen in der geraden Kette und/oder eine Gruppe der allgemeinen Formel 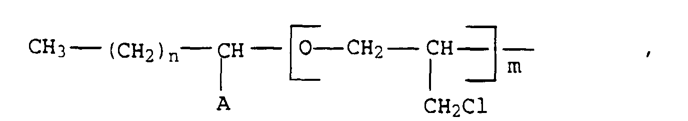 worin A ein Alkylrest mit 1 bis 8 Kohlenstoffatomen ist, n die Werte 3 bis 12 und m die Werte 1 bis 6 annehmen kann, bedeutet, und als difunktionelle Glycidether solche der allgemeinen Formel (II) 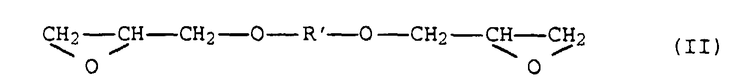 in der R' = Diphenylmethylen, 2,2-Diphenylpropylen (Bisphenol A), unverzweigte Kohlenwasserstoffketten mit 4 bis 10 C-Atomen, methyl- und/oder ethylverzweigte Kohlenwasserstoffketten mit 4 bis 8 C-Atomen in der geraden Kette bedeutet, geeignet.

Gegenstand der Erfindung ist weiterhin die Verwendung der so erhaltenen aminarmen Recyclatpolyole zur Herstellung von zelligen und nichtzelligen PUR.

Die erfindungsgemäß eingesetzten OH-Gruppen enthaltenden Verbindungen enthalten üblicherweise 2 oder 3 OH-Gruppen und nicht mehr als 20 C-Atome.

Besonders geeignet sind Ethylenglykol, Oligoethylenglykole, Propylenglykol, Oligopropylenglykole, Butandiole, Neopentylglykol, Diethanolamin, Methyldiethanolamin und Triethanolamin.

Bevorzugt eingesetzt werden Diethylenglykol, Triethylenglykol, Dipropylenglykol, Tripropylenglykol und Glycerin.

Als Katalysatoren ist der Einsatz von Alkalimetallsalzen kurzkettiger Fettsäuren, von Titanaten, Stannaten und Antimonaten bekannt und üblich.

Als PUR und/oder PHPUR werden insbesondere PUR-Abfälle eingesetzt, wie sie beispielsweise besonders bei der Demontage von Altautomobilen anfallen (z.B. Autositze, Karosserieteile, Armaturenbretter).

Die eingesetzten PUR und/oder PHPUR können mineralische Fasern, beispielsweise in Form von Glasfasern, enthalten, ohne daß das erfindungsgemäße Verfahren gestört wird. Ebenso können die PUR synthetische textile Fasern, insbesondere auf Basis Polyester und/oder Polyamid, enthalten, wie das beispielsweise beim Aufarbeiten von Automobilsitzen der Fall ist. Unter den erfindungsgemäßen Verfahrensbedingungen werden diese Materialien gespalten und gelöst. Sie stören somit nicht.

In dem erfindungsgemäßen Glykolyse-Verfahren sind handelsübliche Glycidether einsetzbar, die eine oder zwei Epoxidgruppen im Molekül enthalten.

Als besonders geeignet erwiesen sich die monofunktionellen Glycidether der allgemeinen Formel (I) 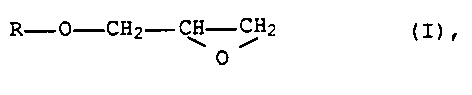 in der R = Phenyl, Cyclohexyl, Methylcyclohexyl, Benzyl, i-Propyl, i-Butyl oder methyl- und/oder ethylverzweigte Kohlenwasserstoffketten mit 5 bis 10 C-Atomen in der geraden Kette und/oder eine Gruppe der allgemeinen Formel 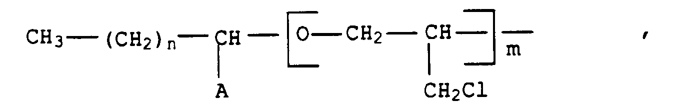 worin A ein Alkylrest mit 1 bis 8 Kohlenstoffatomen ist, n die Werte 3 bis 12 und m die Werte 1 bis 6 annehmen kann, bedeutet.
Bevorzugt eingesetzt wird, insbesondere bei der Verwendung von PUR-Weichschaumabfällen für die Herstellung von Recyclatpolyolen, 2-Ethylhexylglycidether oder ein Gemisch aus
50 bis 85 Gew.-% 2-Ethylhexylglycidether,
10 bis 35 Gew.-% einer oder mehrerer Verbindungen der Struktur 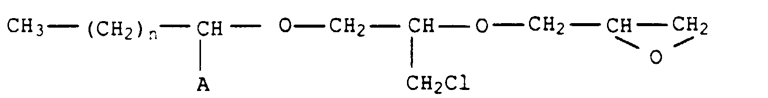 und
5 bis 20 Gew.-% einer oder mehrerer Verbindungen der Struktur 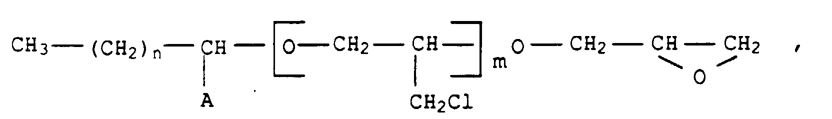 wobei A ein Alkylrest mit 1 bis 8 Kohlenstoffatomen ist, n die Werte 3 bis 12 und m die Werte 2 bis 6 annahmen kann. Dieses Glycidylethergemisch kann in bekannter Weise aus 2-Ethylhexanol und Epichlorhydrin, wie es bei der Synthese von 2-Ethylhexylglycidether anfällt, hergestellt und als technisches Rohprodukt, lediglich von anorganischen Bestandteilen befreit, das heißt ohne Einschaltung eines Destillationsschrittes, eingesetzt werden.

Als geeignet erwiesen sich weiterhin die difunktionellen Glycidether der allgemeinen Formel 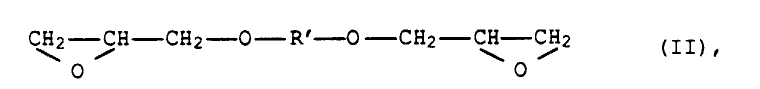 in der R' = Diphenylmethylen, 2,2-Diphenylpropylen (Bisphenol A), unverzweigte Kohlenwasserstoffketten mit 4 bis 10 C-Atomen oder methyl- und/oder ethylverzweigte Kohlenwasserstoffketten mit 4 bis 8 C-Atomen in der geraden Kette bedeutet.

Als Glycidether können monofunktionelle Glycidether der allgemeinen Formel (I) allein oder in Mischung miteinander, difunktionelle Glycidether der allgemeinen Formel (II) allein oder in Mischung miteinander oder Mischungen von einzelnen oder mehreren mono- und difunktionellen Glycidethern eingesetzt werden.

Das Mischungsverhältnis von PUR und/oder PHPUR zu den OH-Gruppen enthaltenden Verbindungen ist stark abhängig von der chemischen Struktur des eingesetzten PUR/PHPUR sowie von der OH-Zahl der eingesetzten OH-Gruppen enthaltenden Verbindungen. Es liegt üblicherweise zwischen 1 : 1 und 3 : 1, vorzugsweise 1,5 bis 2,5 : 1, Gewichtsanteile PUR/ PHPUR zu OH-Gruppen enthaltenden Verbindungen.

Die Reaktionstemperatur wird üblicherweise zwischen 180°C und 250°C, vorzugsweise zwischen 200°C und 235°C eingestellt.

Die Reaktionszeit liegt in Abhängigkeit von der Vernetzungsdichte der eingesetzten PUR und/oder PHPUR im allgemeinen bei 2 bis 6 Stunden, vorzugsweise 3 bis 5 Stunden.

Erfindungsgemäß werden die Glycidether über die gesamte Reaktionszeit, vorzugsweise gleichmäßig, dem aus PUR- und/oder PHPUR und OH-Gruppen enthaltenden Verbindungen bestehenden Ansatz in einer Menge von üblicherweise 5 Gew.% bis 20 Gew.%, bezogen auf den Gesamtansatz, zugegeben.

Es hat sich überraschenderweise gezeigt, daß die Zugabe der Glycidether über die gesamte Reaktionszeit zu Recyclatpolyolen führt, die nur sehr geringe Mengen freier Amine enthalten.

Dieser Sachverhalt ist insofern überraschend, als eine nach Abschluß der Glykolyse erfolgte Zugabe der Glycidether nur zur Bindung etwa eines Drittels der Aminmenge führt. Ein ähnliches Ergebnis wird erhalten, wenn die Gesamtmenge der Glycidether vor Beginn der Glykolyse dem Ansatz beigeführt wird.

Bei erfindungsgemäßem Einsatz der mono- und/oder difunktionellen Glycidether werden mittelviskose Recyclatpolyole erhalten.

Es war weiterhin überraschend, daß bei Einsatz von Glycidethergemischen, insbesondere von Glycidethermischungen der allgemeinen Formel (I), selbst bei Verwendung von DEG und/oder dessen höheren Homologen keine Phasentrennung mehr auftritt und ein völlig homogenes, mittelviskoses Recyclatpolyol entsteht. Auch bei Lagerung über Wochen ist keine Phasentrennung zu beobachten.

Die Erfindung wird an nachfolgenden Beispielen erläutert:

### Beispiele 1 bis 28:

Alle Versuche wurden mit Abfällen von PUR-Verarbeitern durchgeführt.

Die Abfälle wurden in einem Schneidgranulator vorzerkleinert und ohne weitere Behandlung der Glykolyse unterworfen.

In einem mit Rührer, Tropftrichter, Thermometer und Kühler versehenen Kolben wurde das für die Glykolyse eingesetzte Glykol vorgelegt und mit 0,03 Gew.-% Dibutylzinndilaurat als Katalysator, berechnet auf den Gesamtansatz, versetzt.

Nach Aufheizen des Glykols auf 200°C wurden die vorzerkleinerten PUR bzw. PHPUR zugegeben in einer Geschwindigkeit, daß der Kolbeninhalt rührfähig und die Temperatur konstant blieb. Nach Abschluß der Zugabe wurde der Kolben verschlossen, der Kolbeninhalt auf Reaktionstemperatur erwärmt und der Glycidether bzw. das Glycidethergemisch über die gesamte Reaktionszeit gleichmäßig zudosiert. Nach Abschluß der Reaktion wurde das Produkt abgekühlt und analysiert.

Die Charakterisierung des Recyclatpolyols erfolgte durch Bestimmung der OH-Zahl (titrimetrisch), der Viskosität bei 25°C (Rotationsviskosimeter) und des Gehaltes an freien Aminen (Hochdruckflüssigchromatographie (HPLC)).

Die folgende Tabelle zeigt die eingesetzten Rohstoffe, die Reaktionsbedingungen und Resultate.

Die Beispiele 1, 8, 9, 13, 16, 18 und 20 sind Vergleichsbeispiele, die ohne Zugabe von Glycidether präpariert wurden.

Die Beispiele 22, 23 und 24 sind ebenfalls Vergleichsbeispiele, in denen die Gesamtmenge des Glycidethers vor bzw. nach der Glykolyse zugegeben wurde.

In den Beispielen 25 bis 28 wurden PUR-Weichschaumstoffmischungen aus Kaltformschaumstoff (KS), Heißformschaustoff (HS) und Blockschaumstoff (BS) eingesetzt und mit einem Glycidethergemisch umgesetzt.

Als Glycidethergemisch wurde das unbehandelte Rohprodukt der Synthese von 2-Ethylhexylglycidether aus 2-Ethylhexanol und Epichlorhydrin, enthaltend
ca. 70 Gew.-% 2-Ethylhexylglycidether,
ca. 20 Gew.-% von Verbindungen der Struktur 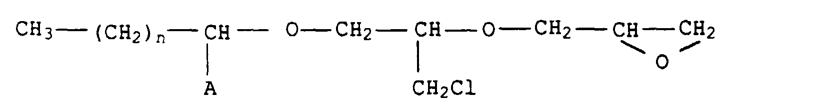 und
ca. 10 Gew.-% von Verbindungen der Struktur 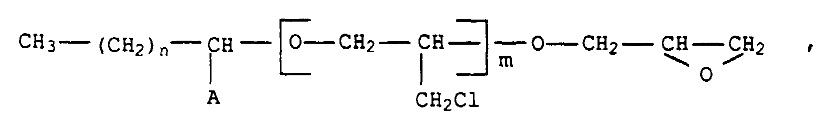
wobei
- A =: Ethyl war,
- n: den Wert 4 und
- m: die Werte 2 bis 3 hatte,
verwandt.

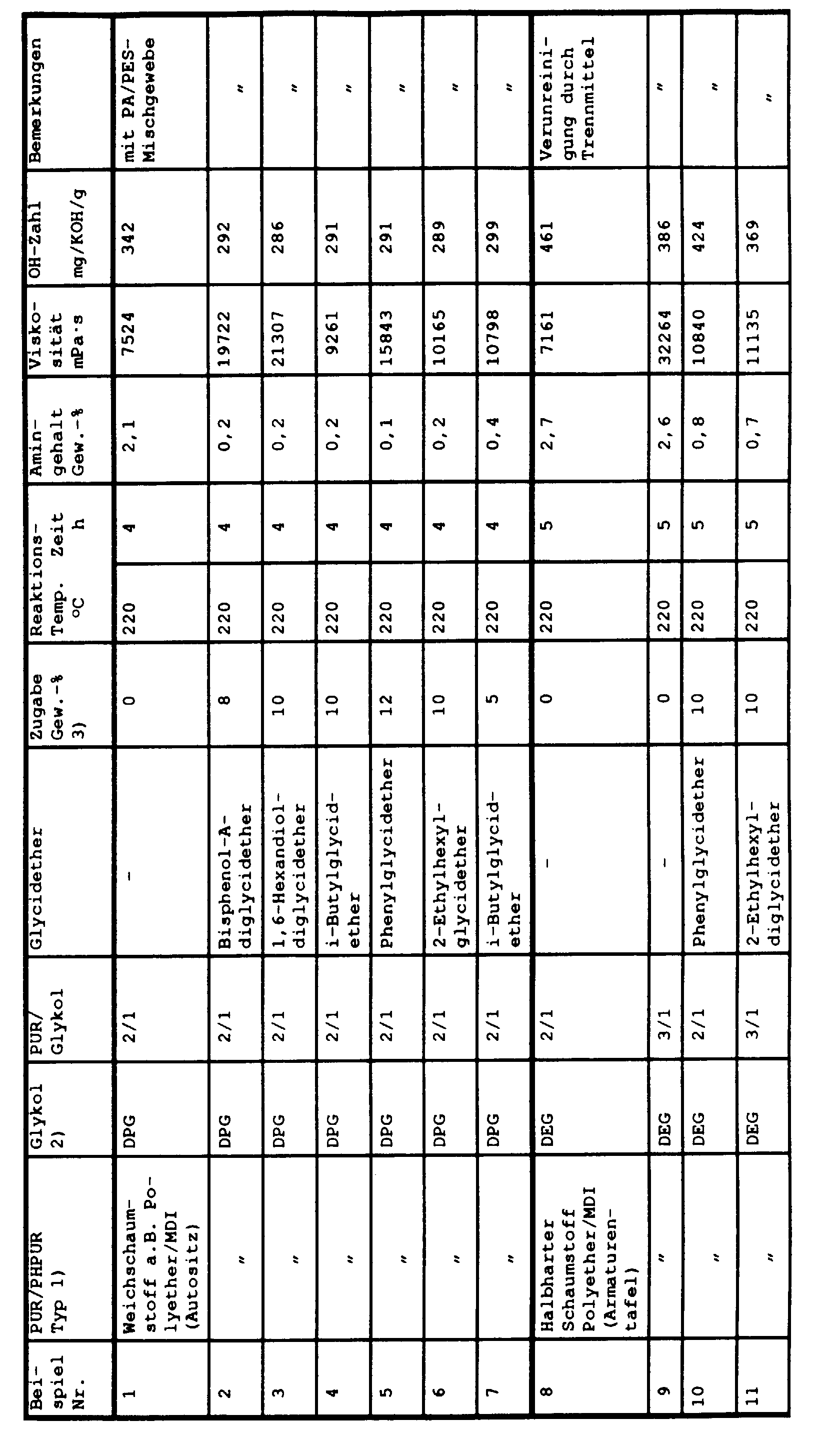

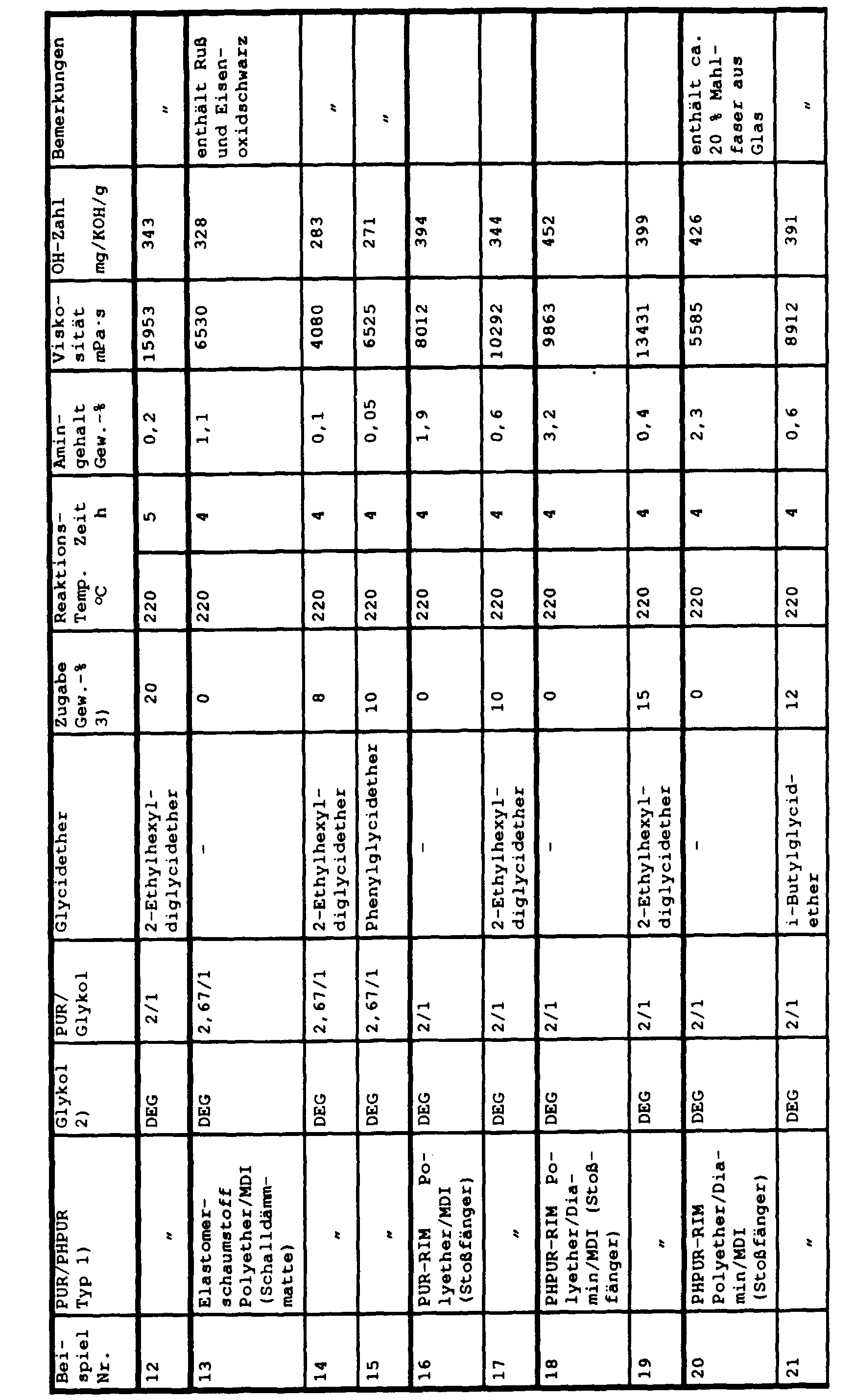

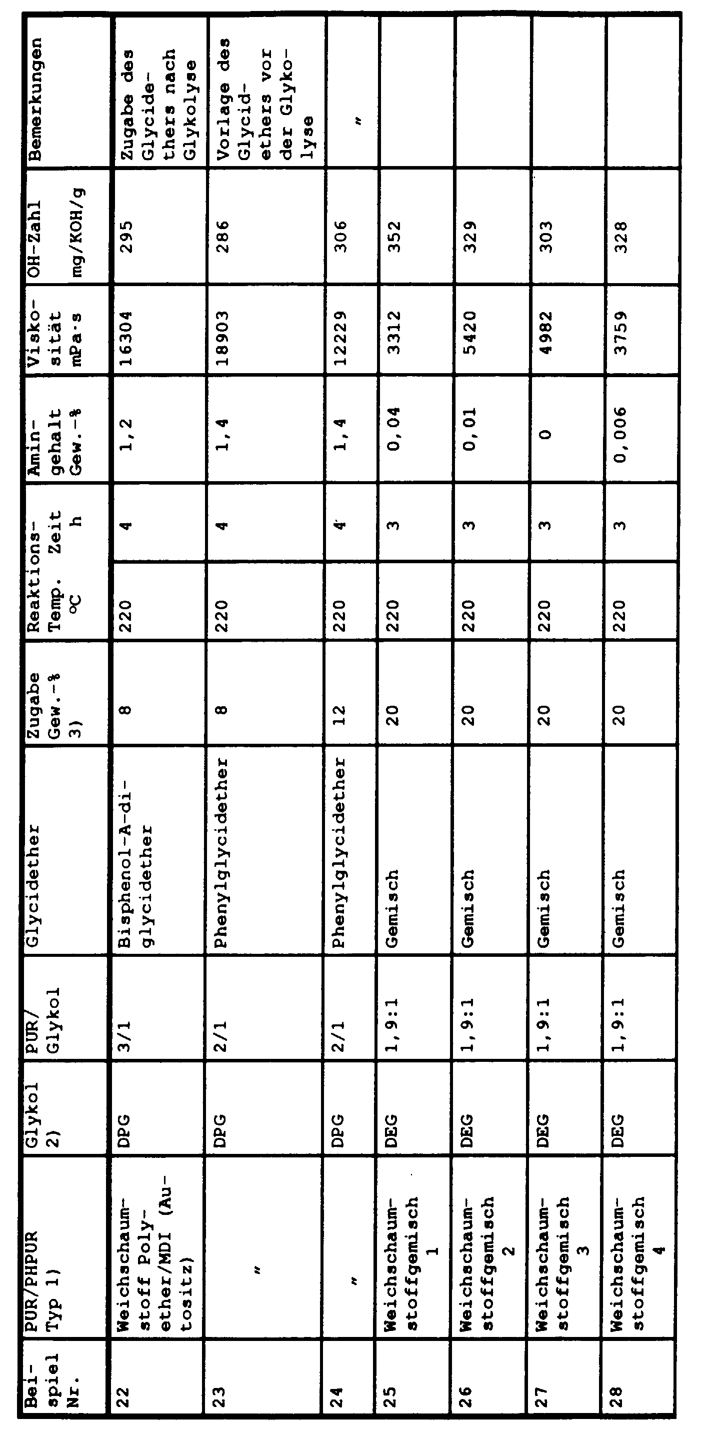

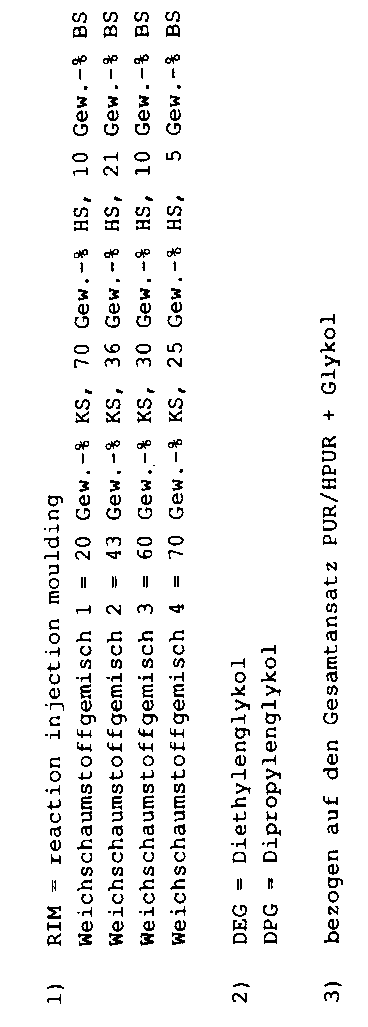

Die nach den Beispielen 25 bis 28 erhaltenen Recyclatpolyole wurden auf ihre Eignung zur Herstellung von PUR untersucht.

### Beispiel 29

### Coating

38,6 Gew.-Teile Recyclatpolyol nach Beispiel 25 wurden mit 20.0 Gew.-Teilen eines linearen Polyetheralkohols mit einer OH-Zahl von 56 mg KOH/g (z.B. Lupranol 1000 der BASF AG), 28,4 Gew.-Teilen eines p-Toluolsulfonsäurealkylesters (z.B. Mesamoll der Leuna-Werte AG), 6,0 Gew.-Teilen eines Trockenmittels a.B. Zeolith, 0,4 Gew.-Teilen Dibutylzinndilaurat, 5,0 Gew.-Teilen Aminaktivator Z 50 (Dabco) und 2,0 Gew.-Teilen Farbpaste/ schwarz gemischt.

Nach Umsetzung mit polymerem Diphenylmethandiisocyanat (z.B. Lupranat M 20S der BASF AG) im Mischungsverhältnis Polyolkomponente : Isocyanatkomponente von 100 : 35 Gew.-Teilen entstand ein elastischer Coating mit folgenden Eigenschaften:

| | |
|---|---|
| Dichte | 1,068 g/cm³ |
| Abrieb | 704 mm³ |
| Zugfestigkeit | 8,7 N/mm² |
| Bruchdehnung | 53 % |
| Weiterreißfestigkeit (GRAVES) | 289 N/cm |
| Härte Shore A | 85. |

### Beispiel 30

### Hartschaumstoff

81,0 Gew.-Teile Recyclatpolyol nach Beispiel 27 wurden mit 10.0 Gew.-Teilen eines Hartschaumpolyetherols der OH-Zahl 440 mg KOH/g, Funktionalität von 4,65, gestartet mit einem Gemisch von Saccharose und Glycerin (z.B. Lupranol VP 9201 der BASF AG), 3,0 Gew.-Teilen Glycerin, 0,3 Gew.-Teilen Tetramethylhexamethylendiamin, 0,3 Gew.-Teilen Dimethylcyclohexylamin, 1,9 Gew.-Teilen Silikonstabilisator und 2,5 Gew.-Teilen Wasser gemischt.

Nach Umsetzung des Gemisches mit polymerem Diphenylmethandiisocyanat (z.B. Lupranat M 20S der BASF AG) im Mischungsverhältnis Polyolkomponente : Isocyanatkomponente von 100 : 128 wurde ein feinzelliger Hartschaumstoff mit folgenden Eigenschaften erhalten:

| | |
|---|---|
| Rohdichte | 49 Kg/m³ |
| Druckfestigkeit (in Schäumrichtung) | 0,41 N/mm² |
| Druckfestigkeit (quer zur Schäumrichtung) | 0,20 N/mm² |
| Offenzelligkeit | 11,7 % |
| Wasseraufnahme | 3,2 % |
| Dimensionsstabilität bei -30°C | < 1 % |
| Dimensionsstabilität bei 80°C | < 1 %. |

## Patentansprüche

1. Verfahren zur Herstellung von Recyclatpolyolen mit niedrigem Amingehalt durch Umsetzung von Polyurethanen und/oder Polyharnstoffpolyurethanen mit nicht mehr als 20 C-Atome und mindestens 2 OH-Gruppen enthaltenden Verbindungen in Gegenwart von Katalysatoren, dadurch gekennzeichnet, daß über den gesamten Verlauf der Reaktion mono- und/oder difunktionelle Glycidether zudosiert werden.

2. Verfahren nach Anspruch 1, dadurch gekennzeichnet, daß als monofunktionelle Glycidether solche der allgemeinen Formel (I) 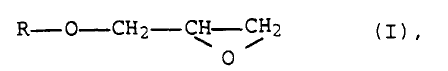 in der R = Phenyl, Cyclohexyl, Methylcyclohexyl, Benzyl, i-Propyl, i-Butyl, methyl- und/oder ethylverzweigte Kohlenwasserstoffketten mit 5 bis 10 C-Atomen in der geraden Kette und/oder eine Gruppe der allgemeinen Formel 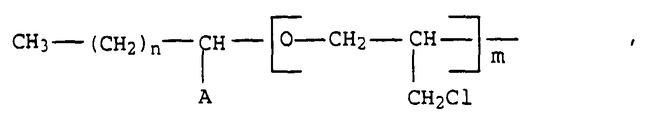 worin A ein Alkylrest mit 1 bis 8 Kohlenstoffatomen ist, n die Werte 3 bis 12 und m die Werte 1 bis 6 annehmen kann, bedeutet, eingesetzt werden.

3. Verfahren nach Anspruch 1, dadurch gekennzeichnet, daß als difunktionelle Glycidether solche der allgemeinen Formel (II) 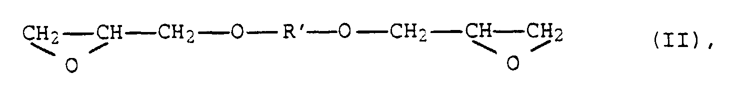 in der R' = Diphenylmethylen, 2,2-Diphenylpropylen, unverzweigte Kohlenwasserstoffketten mit 4 bis 10 C-Atomen, methyl- und/oder ethylverzweigte Kohlenwasserstoffketten mit 4 bis 8 C-Atomen in der geraden Kette bedeutet, eingesetzt werden.

4. Verfahren nach einem der Ansprüche 1 bis 3, dadurch gekennzeichnet, daß als Glycidether monofunktionelle Glycidether der allgemeinen Formel (I) allein oder in Mischung miteinander, difunktionelle Glycidether der allgemeinen Formel (II) allein oder in Mischung miteinander oder Mischungen von einzelnen oder mehreren mono- und difunktionellen Glycidethern eingesetzt werden.

5. Verfahren nach einem der Ansprüche 1 bis 4, dadurch gekennzeichnet, daß die mono- und/oder difunktionellen Glycidether in einer Menge von 5 bis 20 Gew.-%, bezogen auf das gesamte Reaktionsgemisch, zugesetzt werden.

6. Verfahren nach einem der Ansprüche 1 bis 5, dadurch gekennzeichnet, daß die Reaktionstemperatur zwischen 180°C und 250°C, vorzugsweise zwischen 200°C und 235°C, gehalten wird.

7. Verfahren nach einem der Ansprüche 1 bis 6, dadurch gekennzeichnet, daß die Reaktionszeit 2 bis 6 Stunden, vorzugsweise 3 bis 5 Stunden, beträgt.

8. Verfahren nach einem der Ansprüche 1 bis 7, dadurch gekennzeichnet, daß der Glycidether während der Gesamtreaktionszeit gleichmäßig zudosiert wird.

9. Verwendung der nach einem der Ansprüche 1 bis 8 hergestellten Recyclatpolyole zur Herstellung von zelligen und nichtzelligen Polyurethanen.

## Claims

1. A process for the preparation of recyclate polyols having a low amine content by reacting polyurethanes and/or polyurea-polyurethanes with compounds containing not more than 20 carbon atoms and at least 2 OH groups in the presence of catalysts, which comprises metering in monofunctional and/or difunctional glycidyl ethers over the entire course of the reaction.

2. A process as claimed in claim 1, wherein the monofunctional glycidyl ethers used are those of the formula (I) 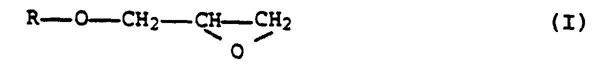 where R is phenyl, cyclohexyl, methylcyclohexyl, benzyl, i-propyl, i-butyl or a methyl- and/or ethyl-branched hydrocarbon chain having 5 to 10 carbon atoms in the linear chain and/or a group of the formula 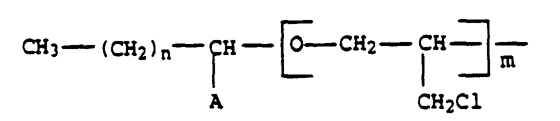 where A is an alkyl radical having 1 to 8 carbon atoms, n is from 3 to 12 and m is from 1 to 6.

3. A process as claimed in claim 1, wherein the difunctional glycidyl ethers used are those of the formula (II) 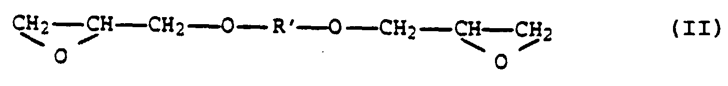 where R' is diphenylmethylene, 2,2-diphenylpropylene, an unbranched hydrocarbon chain having 4 to 10 carbon atoms or a methyl- and/or ethyl-branched hydrocarbon chain having 4 to 8 carbon atoms in the linear chain.

4. A process as claimed in any of claims 1 to 3, wherein the glycidyl ethers used are monofunctional glycidyl ethers of the general formula (I), alone or mixed with one another, difunctional glycidyl ethers of the general formula (II), alone or mixed with one another, or mixtures of one or more mono- and difunctional glycidyl ethers.

5. A process as claimed in any of claims 1 to 4, wherein the monofunctional and/or difunctional glycidyl ethers are added in an amount of from 5 to 20% by weight, based on the entire reaction mixture.

6. A process as claimed in any of claims 1 to 5, wherein the reaction temperature is held at from 180 to 250°C, preferably at from 200 to 235°C.

7. A process as claimed in any of claims 1 to 6, wherein the reaction time is from 2 to 6 hours, preferably from 3 to 5 hours.

8. A process as claimed in any of claims 1 to 7, wherein the glycidyl ethers are metered in at a uniform rate over the entire reaction time.

9. The use of a recyclate polyol prepared as claimed in any of claims 1 to 8 for the preparation of cellular or noncellular polyurethanes.

## Revendications

1. Procédé pour la préparation de polyols de recyclage ayant une faible teneur en amine par réaction de polyuréthannes et/ou de polyurée-polyuréthannes avec des composés ne contenant pas plus de 20 atomes de carbone et au moins 2 groupes OH en présence de catalyseurs, caractérisé par le fait qu'on ajoute avec dosage, pendant tout le déroulement de la réaction, des éthers glycidiques mono- et/ou difonctionnels.

2. Procédé selon la revendication 1, caractérisé par le fait qu'on emploie comme éthers glycidiques monofonctionnels, ceux de formule générale (I) 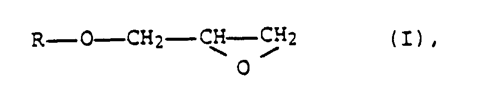 où R = phényle, cyclohexyle, méthylcyclohexyle, benzyle, isopropyle, isobutyle ou des chaînes hydrocarbonées à ramifications méthyle et/ou éthyle ayant 5 à 10 atomes de carbone dans la chaîne droite et/ou un groupe de formule générale 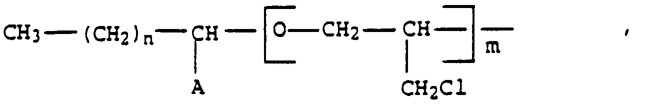 où A représente un reste alkyle ayant 1 à 8 atomes de carbone, n peut prendre les valeurs 3 à 12 et m peut prendre les valeurs 1 à 6.

3. Procédé selon la revendication 1, caractérisé par le fait qu'on emploie comme éthers glycidiques difonctionnels ceux de formule générale (II) 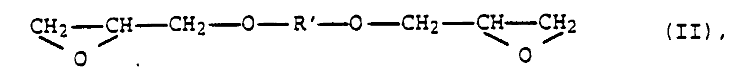 où R' = diphénylméthylène, 2,2-diphénylpropylène, des chaînes hydrocarbonées non ramifiées ayant 4 à 10 atomes de carbone, des chaînes hydrocarbonées à ramifications méthyle et/ou éthyle ayant 4 à 8 atomes de carbone dans la chaîne droite.

4. Procédé selon l'une quelconque des revendications 1 à 3, caractérisé par le fait qu'on emploie, comme éthers glycidiques, des éthers glycidiques monofonctionnels de formule générale (I), seuls ou en mélange entre eux, des éthers glycidiques difonctionnels de formule générale (II), seuls ou en mélange entre eux, ou des mélanges d'un ou plusieurs éthers glycidiques mono- et difonctionnels.

5. Procédé selon l'une quelconque des revendications 1 à 4, caractérisé par le fait qu'on ajoute les éthers glycidiques mono- et/ou difonctionnels en une quantité de 5 à 20 % en poids, par rapport à l'ensemble du mélange réactionnel.

6. Procédé selon l'une quelconque des revendications 1 à 5, caractérisé par le fait qu'on maintient la température de réaction entre 180 et 250°C, de préférence entre 200°C et 235°C.

7. Procédé selon l'une quelconque des revendications 1 à 6, caractérisé par le fait que la durée de réaction est de 2 à 6 heures, de préférence de 3 à 5 heures.

8. Procédé selon l'une quelconque des revendications 1 à 7, caractérisé par le fait qu'on ajoute l'éther glycidique régulièrement, en le dosant, pendant l'ensemble de la durée de la réaction.

9. Utilisation des polyols de recyclage préparés selon l'une quelconque des revendications 1 à 8 pour la préparation de polyuréthannes cellulaires et non cellulaires.
